# EUROPEAN PATENT SPECIFICATION

(11) **EP 4 265 898 B1**
(45) Date of publication and mention of the grant of the patent: **19.06.2024**
(21) Application number: 23166253.7
(22) Date of filing: 31.03.2023
(51) Int. Cl.: F02C 9/40, F02C 3/22, F02C 3/24

(54) **PROPULSION SYSTEM**
ANTRIEBSSYSTEM
SYSTÈME DE PROPULSION

(30) Priority: 20.04.2022 GB 202205731
(43) Date of publication of application: 25.10.2023
(73) Proprietor: Derwent Technologies Ltd, Burton On Trent Staffordshire DE14 1SN (GB)
(72) Inventor: SPEAK, Trevor, Dursley, GL11 4EP (GB); SELLICK, Robert, East Grinstead, RH19 2DY (GB)
(74) Representative: Appleyard Lees IP LLP

(56) References cited:
- EP-A1- 2 902 708
- EP-A1- 3 832 208
- EP-A1- 3 848 636
- EP-B1- 2 207 951
- JP-U- H0 517 356
- US-A- 5 394 685

## Description

The present disclosure relates to a propulsion system.

In particular the disclosure is concerned with a fuel and propulsion system for an aircraft.

### Background

Dual fuel capability (i.e. using more than one fuel type at a time, for example as a blend of hydrogen and methane) has been employed on industrial gas turbines. This results in reduced emissions of carbon dioxide which is a driver of climate change. Since hydrogen and methane are both gasses at ambient conditions, dual fuel capability can be achieved by premixing the fuels.

Hydrogen has been proposed as a fuel for aircraft gas turbines in order to similarly reduce carbon emissions into the atmosphere. However, hydrogen, even in liquid form, occupies a much higher volume per unit energy generation than the liquid hydrocarbon fuels such as kerosene which are currently in use. This greater fuel volume gives rise to significantly increased aircraft size and hence drag and/or reduced payload volume and passenger numbers. The capability of an aircraft to use a combination of hydrogen and liquid hydrocarbon fuel would reduce the volume of hydrogen required by the aircraft and hence also the reduce the drag penalty.

Hence a propulsion system for an aircraft capable of running on a combination of hydrogen and liquid hydrocarbon fuel, with a configuration which enables a switch to burn hydrogen and a liquid hydrocarbon separately or at the same time when needed to deliver power output at acceptable combustion temperatures, stability margins and exhaust emissions is highly desirable.

Document JP H05 17356U discloses a dual fuel main burner known in the art.

### Summary

According to the present disclosure there is provided an apparatus and method as set forth in the appended claims. Other features of the invention will be apparent from the dependent claims, and the description which follows.

Accordingly there may be provided a propulsion system (300) for an aircraft (10) comprising: a first fuel reservoir (100) configured for storing hydrogen (H2-1); a second fuel reservoir (200) configured for storing a hydrocarbon fuel (HC) and a gas turbine engine (400) comprising a fuel injection unit (500). The fuel injection unit (500) may comprise : a hydrogen pilot burner (510) in fluid communication with the first fuel reservoir (100) via a first flow control valve (512); a dual fuel main burner (520) in fluid communication with the first fuel reservoir (100) via a second flow control valve (522) and in fluid communication with the second fuel reservoir (200) via a third flow control valve (532). The propulsion system (300) may further comprise a control system (600) operable to control: the first flow control valve (512) to control the flow of hydrogen (H2-1) from the first fuel reservoir (100) to the hydrogen pilot burner (510); the second flow control valve (522) to control the flow of hydrogen from the first fuel reservoir (100) to the dual fuel main burner (520), and/or the third flow control valve (532) to control the flow of the hydrocarbon fuel (HC) from the second fuel reservoir (200) to the dual fuel main burner (520).

The first fuel reservoir (100) may be a low temperature and low-pressure reservoir for storing liquid hydrogen. The propulsion system may further comprise a third fuel reservoir (800) configured for storing pressurised hydrogen gas (H2-2). The third fuel reservoir (800) may be in fluid communication with the hydrogen pilot burner (510) via a fourth flow control valve (542). The control system (600) may be operable to control the fourth flow control valve (542) to control the flow of hydrogen (H2-2) from the third fuel reservoir (800) to the hydrogen pilot burner (510), the third fuel reservoir (800) being in fluid communication with the hydrogen pilot burner (510) via a fourth flow control valve (542). The first fuel reservoir (100) may be in fluid communication with the hydrogen pilot burner (510) via a heat exchanger (110) configured to deliver heat to the liquid hydrogen delivered from the first fuel reservoir (100) to convert it into gaseous form.

The hydrogen pilot burner (510) may comprise a plurality of flow outlets (514) in flow communication with the first fuel reservoir (100).

The hydrogen pilot burner (510) may comprise a plurality of flow outlets (514) in flow communication with the first fuel reservoir (100) and the third fuel reservoir (800).

The dual fuel main burner (520) may comprise a plurality of outlets (524, 528) which surround the hydrogen pilot burner (510). A first subset (528) of dual fuel main burner outlets (524) may be in flow communication with the first fuel reservoir (100) via a first flow passage (550); and a second subset (530) of the dual fuel main burner outlets (524) are in flow communication with the second fuel reservoir (200) via a second flow passage (552); the first flow passage (550) and second flow passage (552) being fluidly isolated from one another.

The control system (600) may be operable to control the first flow control valve (512), second flow control valve (522) and third flow control valve (532) such that:
a. in a first mode of operation, the first flow control valve (512) is open, the second flow control valve (522) is closed and the third flow control valve (532) is closed such that only hydrogen is delivered to the pilot burner (510);
b. in a second mode of operation, the first flow control valve (512) is open, the second flow control valve (522) is open and the third flow control valve (532) is closed such that only hydrogen is delivered to the pilot burner (510) and dual fuel main burner (520) ;
c. in a third mode of operation, the first flow control valve (512) is open to deliver hydrogen to the pilot burner (510) and both the second flow control valve (522) and third flow control valve (532) are open such that hydrogen and hydrocarbon fuel (HC) are delivered to the dual fuel main burner (520); and
d. in a fourth mode of operation, the first flow control valve (512) is open such that only hydrogen is delivered to the pilot burner (510); the second flow control valve (522) is closed and the third flow control valve (532) is open such that only hydrocarbon fuel (HC) is delivered to the dual fuel main burner (520).

The control system (600) may be operable to control the fourth flow control valve (542) to be closed in the first, second, third, and fourth mode of operation.

The control system (600) may be operable to control the first flow control valve (512), second flow control valve (522), third flow control valve (532) and fourth flow control valve (542) such that:
in a fifth mode of operation, the first flow control valve (512) is closed, the second flow control valve (522) is closed and the third flow control valve (532) is closed and the fourth flow control valve (542) is open such that only hydrogen is delivered to the pilot burner (510) from the third fuel reservoir (800); and
in a sixth mode of operation the first flow control valve (512) is closed, the second flow control valve (522) is closed; the third flow control valve (532) is open such that only hydrocarbon fuel (HC) is delivered to the dual fuel main burner (520); and the fourth flow control valve (542) is open to deliver hydrogen to the pilot burner (510) from the third fuel reservoir (800).

The control system (600) is operable to control the first flow control valve (512), second flow control valve (522), third flow control valve (532) and fourth flow control valve (542) such that: in a **seventh mode of operation** the first flow control valve (512) and fourth flow control valve (542) are closed such that no fuel is delivered to the pilot burner (510), and the second control valve (522) is closed and third flow control valve (532) is open such that only hydrocarbon fuel (HC) is delivered to the dual fuel main burner (520).

The gas turbine engine (400) may further comprise a combustor (700).

There may also be provided an aircraft (10) comprising a propulsion system (300) according to the present disclosure wherein: the control system (600) is operable to control the rate of opening/closing of the first flow control valve (512), second flow control valve (522) and third flow control valve (532) relative to one another to transition between the first mode of operation, second mode of operation, third mode of operation and/or fourth mode of operation.

The control system (600) may be operable to control the rate of opening/closing of the first flow control valve (512), second flow control valve (522), third flow control and fourth control valve (542) relative to one another to transition between the modes of operation.

The first mode of operation may correspond to a gas turbine engine (400) start, idle and/or low-power condition. The other modes of operation provide a range of power conditions.

Hence there is provided a propulsion system for an aircraft capable of running on hydrogen, with the ability to switch to a hydrocarbon fuel, or burn hydrogen and a hydrocarbon at the same time when needed for a particular engine condition (for example take off).

### Brief Description of the Drawings

Examples of the present disclosure will now be described with reference to the accompanying drawings, in which:
Figure 1 shows a representation of a view of an aircraft comprising a fuel and propulsion system according to the present disclosure;
Figure 2 is a diagrammatic representation of the fuel and propulsion system according to the present disclosure;
Figures 3 to 7 illustrate different possible modes of operation of the propulsion system shown in figure 2;
Figure 8 shows a cross-sectional view of part of an example of a fuel injector and combustor which may be used in the propulsion system according to the present disclosure; and
Figure 9 shows an end on view of the fuel injector shown in figure 8.

### Detailed Description

The present disclosure relates to a propulsion system for an aircraft, an aircraft comprising a propulsion system according to the present disclosure, and a method of operation of the propulsion system and a method of operation of the aircraft.

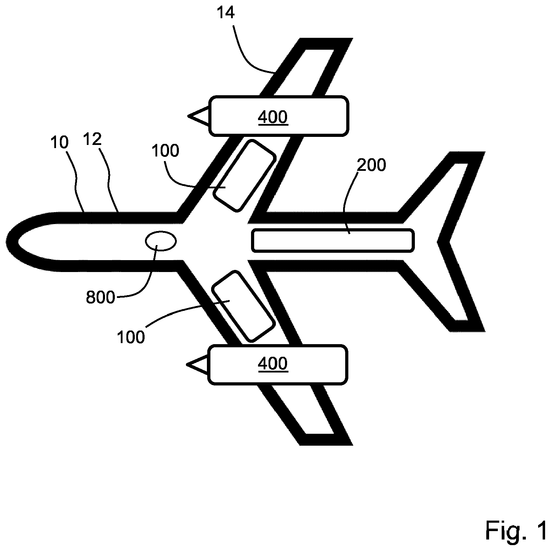

A diagrammatic representation of an aircraft 10 comprising a propulsion system 300 according to the present disclosure is shown in figure 1. Hence the aircraft 10 may comprise a fuselage 12 and wings 14. The propulsion system 300 may comprise a first fuel reservoir 100 configured for storing hydrogen (H2-1) and a second fuel reservoir 200 configured for storing a hydrocarbon fuel (HC). The first fuel reservoir (which may also be termed a "first hydrogen fuel reservoir") 100 may be a low temperature and low-pressure reservoir for storing liquid hydrogen. The first fuel reservoir 100 may be in fluid communication with the hydrogen pilot burner 510 via a heat exchanger 110 configured to deliver heat to the liquid hydrogen delivered from the first fuel reservoir 100 to convert it into gaseous form.

The propulsion system may further comprise a third fuel reservoir 800 configured for storing pressurised hydrogen gas H2-2. The third fuel reservoir 800 (which may also be termed a "second hydrogen fuel reservoir") may be in fluid communication with the hydrogen pilot burner 510 via a fourth flow control valve 542.

The location of the reservoirs 100, 200, 800 shown in figure 1 is by way of example only. The location of engines and fuel tanks shown in figure 1 are typical, but may be provided in different locations and configurations to that shown.

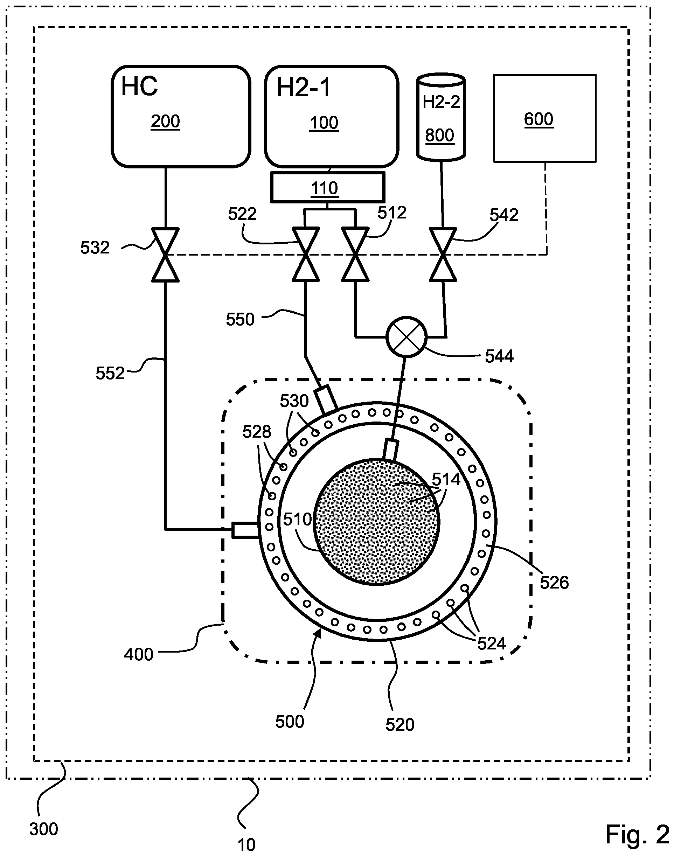

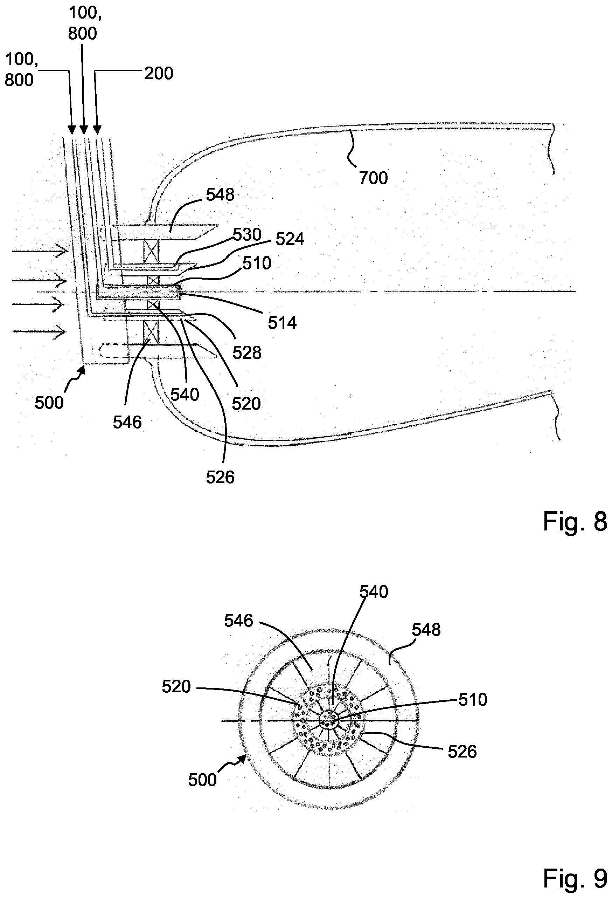

The propulsion system may further comprise a gas turbine engine 400 comprising a fuel injection unit 500, for example as shown in figures 2 to 7 and figures 8,9. The gas turbine engine 400 further comprises a combustor 700 into which the fuel injection unit 500 delivers fuel. In figures 2 to 7 the combustor is not shown. An example of a combustor 700 is shown in figure 8. The combustor 700 may be annular, as shown in figure 8. Other examples the combustor may have different configurations. The design of the combustor 700 may be of any suitable design, and its detail need not be discussed here. Likewise there may be provided more than one fuel injection unit 500, for example in an annular combustor 700, there may be provided a plurality of fuel injection units 500 spaced around an inlet to the combustor 700. Alternatively, if the engine 400 comprises a plurality of combustors, then each combustor may be provided with one or more fuel injection units 500.

The heat exchanger 110 may be in thermal communication with a heat source. In some examples the heat source may be the engine 400. Hence some of the heat generated by the engine 400 may be transferred to the liquid hydrogen as it travels between the first reservoir 102 the fuel injection unit 500.

The fuel injection unit 500 may comprise a hydrogen pilot burner 510 in fluid communication with the first hydrogen fuel reservoir 100 via a first flow control valve 512. In examples in which the second hydrogen fuel reservoir 800 is provided, the hydrogen pilot burner 510 may be in fluid communication with the second hydrogen fuel reservoir 800 via a second flow control valve 542. For example the hydrogen pilot burner 510 may be in fluid communication with only a source of hydrogen fuel, and is fully isolated from a source of any other fuel.

The fuel injection unit 500 may further comprise a dual fuel main burner 520 in fluid communication with the first fuel reservoir 100 via a second flow control valve 522 and in fluid communication with the second fuel reservoir 200 via a third flow control valve 532.

The propulsion system 300 may further comprise a control system 600 operable to control the first flow control valve 512 to control the flow of hydrogen H2-1 from the first fuel reservoir 100 to the hydrogen pilot burner 510, the second flow control valve 522 to control the flow of hydrogen from the first fuel reservoir 100 to the dual fuel main burner 520 and the third flow control valve 532 to control the flow of the hydrocarbon fuel HC from the second fuel reservoir 200 to the dual fuel main burner 520.

The control system 600 may be operable to control the fourth flow control valve 542 to control the flow of hydrogen H2-2 from the third fuel reservoir 800 to the hydrogen pilot burner 510.

As shown in figures 2 to 7, 9 the hydrogen pilot burner 510 comprises a plurality of flow outlets 514 in flow communication with the first fuel reservoir 100 via a flow passage 562a. That is to say the hydrogen pilot burner 510 comprises a first inlet 560 to a third manifold which is in fluid communication with plurality of flow outlets 514 via a flow passage 562a. The plurality of flow outlets 514 may additionally be in flow communication with the third fuel reservoir 800 via a flow passage 562b.

The flow passage 562a and flow passage 562b may be in flow communication with the first inlet 560 via a valve 544. A further flow passage 564 may provide fluid communication between the valve 544 and the inlet 560.

As shown in figure 8, the plurality of flow outlets 514 may be provided on a downstream end face of the hydrogen pilot burner 510.

An inner swirler 540 may extend radially outwards from the hydrogen pilot burner 510 to the dual fuel burner 520 to thereby physically link the hydrogen pilot burner 510 and the dual fuel burner 520, for example so that one may be carried on the other.

An outer swirler 546 may extend radially outwards from the dual fuel burner 520 to a shroud 548 to thereby physically link the dual fuel burner 520 and the shroud 546, for example so that one may be carried on the other.

The inner swirler 540 and the outer swirler 546 may comprise a plurality of spaced apart vanes to allow the passage of air therebetween. The vanes may be angled to the direction of flow to thereby impart swirl to the airflow to therefore aid with the mixing of the fuel and air delivered to the combustor 700. The vanes may also be angled in such a way to impart swirl to the airflow to atomise the liquid hydrocarbon fuel to aid with its combustion and mixing with hydrogen.

The dual fuel main burner 520 may be provided as a ring 526 around the hydrogen pilot burner 510. A plurality of outlets 524 may be provided on the downstream end of the ring 526, such that the outlets 524 surround the hydrogen pilot burner 510.

A first subset 528 of dual fuel main burner outlets 524 are in flow communication with the first fuel reservoir 100 via a first flow passage 550. That is to say the ring 526 comprises a second inlet 556 to a second manifold which is in fluid communication with the first subset 528 of the dual main burner outlets 524. A second subset 530 of the dual fuel main burner outlets 524 are in flow communication with the second fuel reservoir 200 via a second flow passage 552. That is to say the ring 526 comprises a third inlet 559 to a second manifold which is in fluid communication with the second subset 530 of the dual main burner outlets 524. The first flow passage 550 and second flow passage 552 are fluidly isolated from one another. The first manifold and second manifold are fluidly isolated from one another.

In one example (as shown in figure 2), the first subset 528 and second subset 530 of the dual fuel main burner outlets 524 may be provided on the downstream end/face of the ring 526.

In a second example (as shown in figure 8) the first subset 528 and second subset 530 of the dual fuel main burner outlets 524 may be provided on the downstream end/face of the ring 526 and the second subset 530 of the dual main burner outlets 524 may extend radially for example as shown in figure 8, exiting the body of the dual fuel main burner upstream of the face on which the first subset 528 of dual fuel main burner outlets 524 are located.

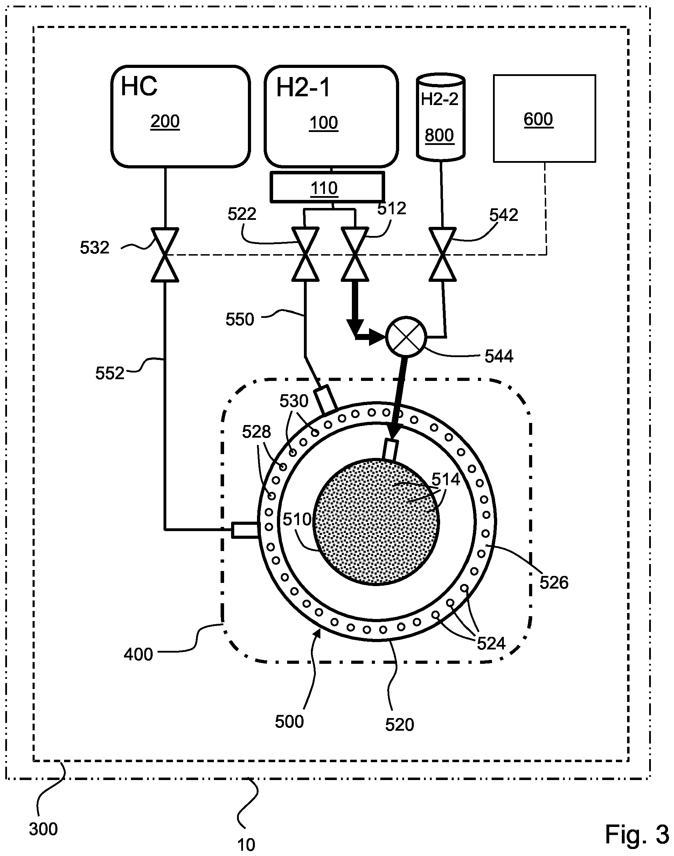

The control system 600 may be operable to control the first flow control valve 512, second flow control valve 522 and third flow control valve 532 in different modes of operation, as shown in Figures 3 to 7. In figures 3 to 7 arrows overlaid on flow passages indicate flow along the flow passage. Where there is no arrow indicating flow, there is no flow.

In a **first mode of operation**, as shown in figure 3, the first flow control valve 512 is open, the second flow control valve 522 is closed and the third flow control valve 532 is closed such that only hydrogen is delivered to the pilot burner 510. The **first mode of operation** may correspond to a gas turbine engine 400 start, idle and/or low-power condition.

The other **modes of operation**, set out below, provide a range of power conditions to best match the requirements of the propulsion system 300 and aircraft 10 mission.

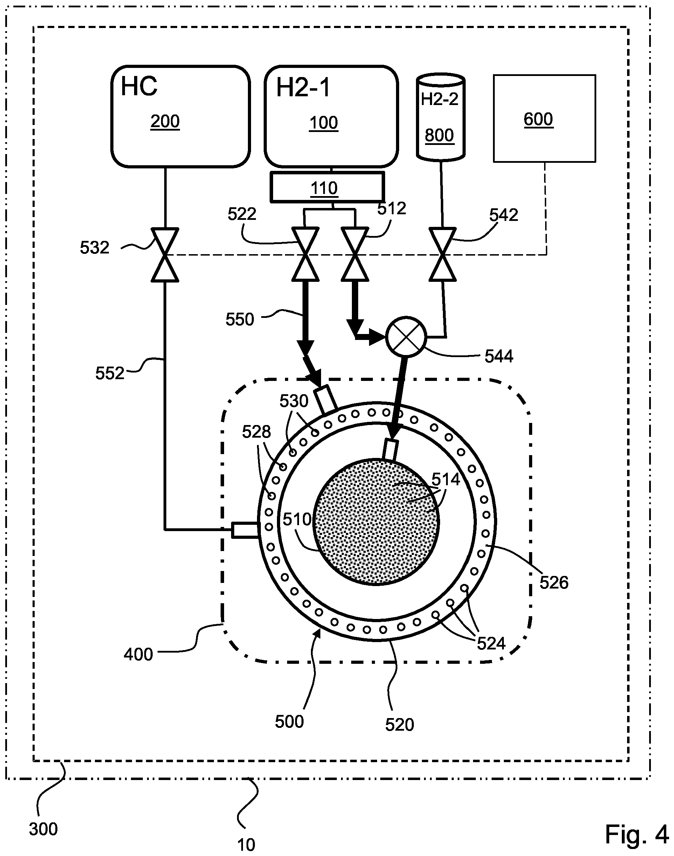

In a **second mode of operation**, as shown in figure 4, the first flow control valve 512 is open, the second flow control valve 522 is open and the third flow control valve 532 is closed such that only hydrogen is delivered to the pilot burner 510 and dual fuel main burner 520. This may provide a high power cruise condition.

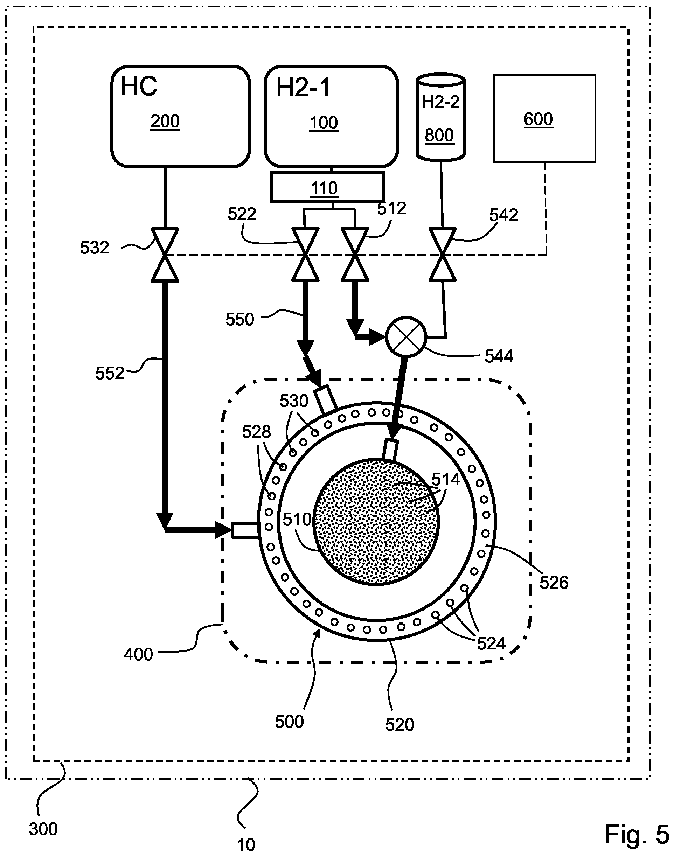

In a **third mode of operation**, as shown in figure 5, the first flow control valve 512 is open to deliver hydrogen to the pilot burner 510 and both the second flow control valve 522 and third flow control valve 532 are open such that hydrogen and hydrocarbon fuel HC are delivered to the dual fuel main burner 520. This may correspond to a high power condition to maximise CO2 reduction subject to satisfactory NOx emissions.

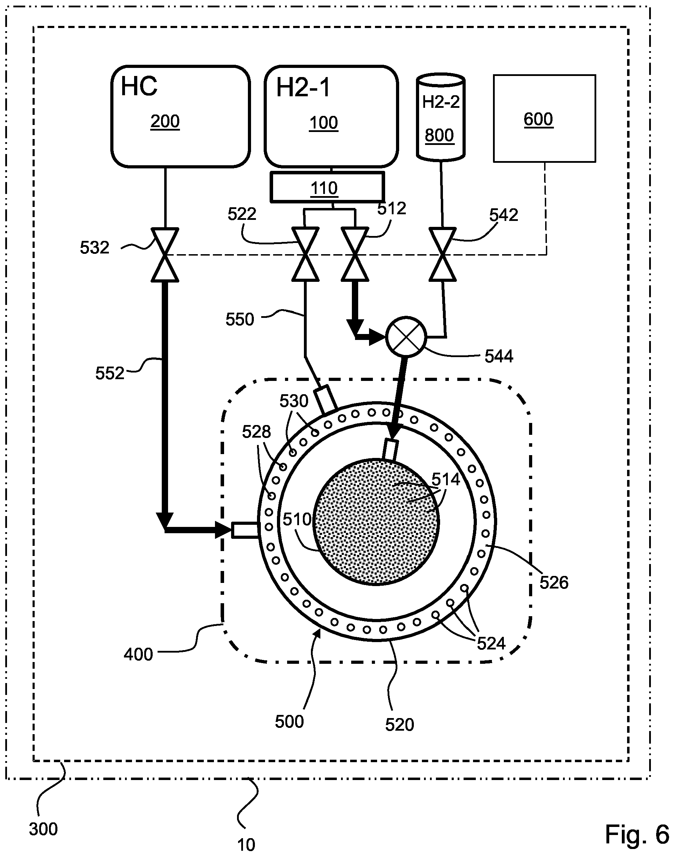

In a **fourth mode of operation**, as shown in figure 6, the first flow control valve 512 is open such that only hydrogen is delivered to the pilot burner 510, and the second flow control valve 522 is closed and the third flow control valve 532 is open such that only hydrocarbon fuel HC is delivered to the dual fuel main burner 520. This mode may correspond to an aircraft/engine take-off condition..

In examples where the fourth flow control valve 542 is present, the control system 600 is operable to control the fourth flow control valve 542 to be closed in the **first, second, third** and **fourth mode of operation**.

Hence in the **first, second, third** and **fourth mode of operation** a constant pilot burner flame is provided. In examples where hydrocarbon fuel is provided, this enables leaner burning of the hydrocarbon fuel in the main burner 520, resulting in a cleaner burn and avoids a rich burning primary zone required by conventional twin annular staged burners which limits NOx reduction capability.

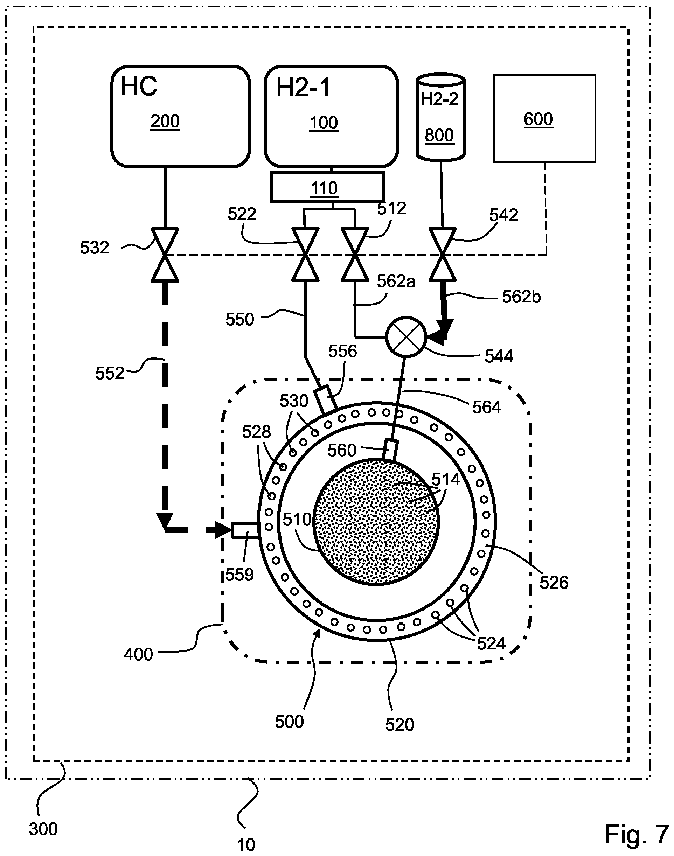

The control system 600 is operable to control the first flow control valve 512, second flow control valve 522, third flow control valve 532 and fourth flow control valve 542 such that in a **fifth mode of operation**, as shown in figure 7, the first flow control valve 512 is closed, the second flow control valve 522 is closed and the third flow control valve 532 is closed and the fourth flow control valve 542 is open such that only hydrogen is delivered to the pilot burner 510 from the third fuel reservoir 800. The fifth mode of operation may correspond to a normal engine start mode and can be used to provide hydrogen to the pilot burner when supplies of liquid hydrogen from the first hydrogen fuel reservoir 100 are not available.

The control system 600 is operable to control the first flow control valve 512, second flow control valve 522, third flow control valve 532 and fourth flow control valve 542 such that in a **sixth mode of operation**, as shown in figure 7, the first flow control valve 512 is closed, the second flow control valve 522 is closed and the third flow control valve 532 is open such that only hydrocarbon fuel HC is delivered to the dual fuel main burner 520 (as indicated by a bold dashed line overlaying flow passage 552) and the fourth flow control valve 542 is open to deliver hydrogen to the pilot burner 510 from the third fuel reservoir 800.

The control system 600 is operable to control the first flow control valve 512, second flow control valve 522, third flow control valve 532 and fourth flow control valve 542 such that in a **seventh mode of operation** the first flow control valve 512, and fourth flow control valve 542 are closed such that no fuel is delivered to the pilot burner 510, and the second control valve (522) is closed and third flow control valve 532 is open such that only hydrocarbon fuel HC is delivered to the dual fuel main burner 520. Such an example may be at higher power output conditions of the gas turbine engine when a main flame is stable and the pilot burner is not required. This mode may also mitigate the risk of thermal distress of the pilot burner caused by hydrogen combustion at the very severe Take-Off operating conditions. This mode may also permit aircraft operation when a source of liquid hydrogen fuel is not available. For example, this mode of operation may permit operation/recovery from airports without hydrogen refuelling stations to airports with such a capability. This mode may also correspond to an engine cruise state, with the pilot burner switched off, as the pilot burner may only be required for low power operation.

The control system 600 is operable to control the rate of opening/closing of the first flow control valve 512, second flow control valve 522 and third flow control valve 532 relative to one another to transition between the **first mode of operation**, **second mode of operation, third mode of operation** and/or **fourth mode of operation**.

The control system 600 is operable to control the rate of opening/closing of the first flow control valve 512, second flow control valve 522, third flow control and fourth control valve 542 relative to one another to transition between the **modes of operation**.

The fuel injection unit 500 comprising a hydrogen pilot injector 510 has been developed to address the problems created for aircraft 10 and gas turbine engine 400 by the significantly different physical properties of hydrogen compared to conventional hydrocarbon fuels HC.

For the aircraft 10 the major issue of using hydrogen as a fuel is the low volumetric density of hydrogen which results in the need for large tanks with the attendant weight and aerodynamic drag penalties. Passenger carrying capacity can also be reduced.

By using liquid hydrogen stored at cryogenic temperatures (-253K), the volume required to store the hydrogen fuel in an aircraft is reduced, thus resulting in less impact on aircraft range.

The hydrogen tank size required for supplying the pilot jet will be significantly smaller than an 100% hydrogen fuelled aircraft 10 and there are more options where it can be located on the aircraft 10. In addition to this baseline piloted burner which permits full aircraft 10 range capability, provision of an additional hydrogen feed to the main burner would permit an increase in CO2 saved without increasing tank size. This flow would be modulated according to the length of flight.

Additionally, carrying a supply of hydrocarbon fuel such as kerosene or sustainable aviation fuel allows the aircraft 10 to operate over longer flights on both fuels over the full thrust range.

Liquid hydrocarbon can be used for the reserve fuel that has to be carried in case of diversion. This reduces the size of the hydrogen tanks and associated weight and drag penalties.

The ability to vary the ratio of liquid hydrocarbon and hydrogen consumed during cruise is another potential mitigation to manage the increased contrail risk caused by hydrogen combustion.

The extreme reactivity of hydrogen and high extinction strain rate results in excellent flame stability and permits use of lower equivalence ratios to reduce flame temperature without flame weak extinction problems when operating at low power or under-fuelling conditions when decelerating the gas turbine engine 400.

The use of a hydrogen fuelled pilot zone that can be operated at very low equivalence ratios has the potential to remove the constraint limiting the NOx reduction that can be achieved by current burner concepts.

This arrangement of the present disclosure would also permit the supply of additional hydrogen to the main burner to be restricted to flight conditions such as cruise where the compressor delivery pressures and temperatures are significantly lower and the risk of damaging the fuel injector is reduced. Injecting the hydrogen to the main burner airflow ensures combustion at a low equivalence ratio and low emissions. The lower hydrogen flow also reduces the size of the fuel delivery and heat management system.

Low power operation around the airport can be hydrogen fuelled which will reduce unburnt hydrocarbon and particulate emissions.

Hydrogen is predicted to be lower cost than green synthetic fuels which require hydrogen and captured CO2 to be processed. The hydrogen pilot also reduces NOx emissions from aircraft 10 using either sustainable or conventional hydrocarbon fuel HCs.

Providing a source pressurised hydrogen gas as well as liquid hydrogen gas is advantageous as pressurised hydrogen can be stored for long periods without the boil off issues of liquid hydrogen. This combination of fuel sources would permit operation/recovery from airports without hydrogen refuelling stations to airports with that capability. The aircraft range capability would depend on the pressurised tank size and pilot burner flow rate.

Additionally, a combustor configured for liquid hydrocarbon fuel (e.g. kerosene) use may be employed with the fuel injection unit 500, rather than a specially configured combustor for dual fuel use. That is to say, starting with a combustor design optimised for take-off operation, with ports and cooling configured for a Take-Off (normally Hot Day) operating point with the control system delivering kerosene to the main burner has been determined to be a suitable configuration to achieve the lowest practical primary zone temperature for the turbine entry temperature required at that flight condition. This sets the quantity of air available for liner cooling and dilution.

The inventors have determined that at the take-off condition the higher flame temperature of hydrogen dictated a leaner combustor primary zone is required to avoid excessive NOx leaving less air for cooling and dilution. A propulsion system according to the present disclosure is provided with a combustor configured to use kerosene at a take-off condition, and to exploit the excellent flame stability burning characteristics of hydrogen in the pilot zone.

In the propulsion system of the present disclosure, in order to increase the quantity of hydrogen that is consumed in a flight, additional hydrogen is delivered to the main burner during cruise.

The control system arrangement of the present disclosure permits the ratio of hydrogen to hydrocarbon to be varied to therefore enable the performance of the propulsion system to be "tuned" as required.

## Claims

1. A propulsion system (300) for an aircraft (10) comprising:
a first fuel reservoir (100) configured for storing hydrogen (H2-1);
a second fuel reservoir (200) configured for storing a hydrocarbon fuel (HC);
a gas turbine engine (400) comprising a fuel injection unit (500) comprising :
a hydrogen pilot burner (510) in fluid communication with the first fuel reservoir (100) via a first flow control valve (512);
a dual fuel main burner (520) in fluid communication with the first fuel reservoir (100) via a second flow control valve (522) and in fluid communication with the second fuel reservoir (200) via a third flow control valve (532);
a control system (600) operable to control:
the first flow control valve (512) to control the flow of hydrogen (H2-1) from the first fuel reservoir (100) to the hydrogen pilot burner (510);
the second flow control valve (522) to control the flow of hydrogen from the first fuel reservoir (100) to the dual fuel main burner (520);
the third flow control valve (532) to control the flow of the hydrocarbon fuel (HC) from the second fuel reservoir (200) to the dual fuel main burner (520).

2. A propulsion system (300) as claimed in claim 1 wherein the first fuel reservoir (100) is a low temperature and low-pressure reservoir for storing liquid hydrogen; and
the propulsion system further comprises a third fuel reservoir (800) configured for storing pressurised hydrogen gas (H2-2);
the third fuel reservoir (800) being in fluid communication with the hydrogen pilot burner (510) via a fourth flow control valve (542);
the control system (600) operable to control:
the fourth flow control valve (542) to control the flow of hydrogen (H2-2) from the third fuel reservoir (800) to the hydrogen pilot burner (510);
the third fuel reservoir (800) being in fluid communication with the hydrogen pilot burner (510) via the fourth flow control valve (542).

3. A propulsion system (300) as claimed in claim 2 wherein
the first fuel reservoir (100) is in fluid communication with the hydrogen pilot burner (510) via a heat exchanger (110) configured to deliver heat to the liquid hydrogen delivered from the first fuel reservoir (100) to convert it into gaseous form.

4. A propulsion system (300) as claimed in any one of claims 1 to 3 wherein: the hydrogen pilot burner (510) comprises a plurality of flow outlets (514) in flow communication with the first fuel reservoir (100).

5. A propulsion system (300) as claimed in claims 2 to 3 wherein:
the hydrogen pilot burner (510) comprises a plurality of flow outlets (514) in flow communication with the first fuel reservoir (100) and the third fuel reservoir (800).

6. A propulsion system (300) as claimed in any one of the preceding claims wherein:
the dual fuel main burner (520) comprises a plurality of outlets (524, 528) which surround the hydrogen pilot burner (510);
wherein a first subset (528) of dual fuel main burner outlets (524) are in flow communication with the first fuel reservoir (100) via a first flow passage (550); and a second subset (530) of the dual fuel main burner outlets (524) are in flow communication with the second fuel reservoir (200) via a second flow passage (552); the first flow passage (550) and second flow passage (552) being fluidly isolated from one another.

7. A propulsion system (300) as claimed in any one of the preceding claims wherein the control system (600) is operable to control the first flow control valve (512), second flow control valve (522) and third flow control valve (532) such that:
a. in a **first mode of operation**, the first flow control valve (512) is open, the second flow control valve (522) is closed and the third flow control valve (532) is closed such that only hydrogen is delivered to the pilot burner (510);
b. in a **second mode of operation**, the first flow control valve (512) is open, the second flow control valve (522) is open and the third flow control valve (532) is closed such that only hydrogen is delivered to the pilot burner (510) and dual fuel main burner (520) ;
c. in a **third mode of operation**, the first flow control valve (512) is open to deliver hydrogen to the pilot burner (510) and both the second flow control valve (522) and third flow control valve (532) are open such that hydrogen and hydrocarbon fuel (HC) are delivered to the dual fuel main burner (520); and
d. in a **fourth mode of operation**, the first flow control valve (512) is open such that only hydrogen is delivered to the pilot burner (510); the second flow control valve (522) is closed and the third flow control valve (532) is open such that only hydrocarbon fuel (HC) is delivered to the dual fuel main burner (520).

8. A propulsion system (300) as claimed in claim 7 when dependent on claim 2 wherein the control system (600) is operable to control the fourth flow control valve (542) to be closed in the first, second, third, and **fourth mode of operation**.

9. A propulsion system (300) as claimed in claim 8 wherein the control system (600) is operable to control the first flow control valve (512), second flow control valve (522), third flow control valve (532) and fourth flow control valve (542) such that:
in a **fifth mode of operation**, the first flow control valve (512) is closed, the second flow control valve (522) is closed and the third flow control valve (532) is closed and the fourth flow control valve (542) is open such that only hydrogen is delivered to the pilot burner (510) from the third fuel reservoir (800); and
in a **sixth mode of operation** the first flow control valve (512) is closed, the second flow control valve (522) is closed; the third flow control valve (532) is open such that only hydrocarbon fuel (HC) is delivered to the dual fuel main burner (520); and the fourth flow control valve (542) is open to deliver hydrogen to the pilot burner (510) from the third fuel reservoir (800).

10. A propulsion system (300) as claimed in any one of claims 2 to 9 wherein the control system (600) is operable to control the first flow control valve (512), second flow control valve (522), third flow control valve (532) and fourth flow control valve (542) such that:
in a **seventh mode of operation** the first flow control valve (512), and fourth flow control valve (542) are closed such that no fuel is delivered to the pilot burner (510), and the second control valve (522) is closed and third flow control valve (532) is open such that only hydrocarbon fuel (HC) is delivered to the dual fuel main burner (520).

11. A propulsion system (300) as claimed in any one of the preceding claims wherein the gas turbine engine (400) further comprises a combustor (700).

12. An aircraft (10) comprising a propulsion system (300) as claimed in any one of claims 7 to 11 wherein: the control system (600) is operable to control the rate of opening/closing of the first flow control valve (512), second flow control valve (522) and third flow control valve (532) relative to one another to transition between the **first mode of operation, second mode of operation, third mode of operation and/or fourth mode of operation.**

13. An aircraft (10) comprising a propulsion system (300) as claimed in claim 9 wherein: the control system (600) is operable to control the rate of opening/closing of the first flow control valve (512), second flow control valve (522), third flow control and fourth control valve (542) relative to one another to transition between the modes of operation.

14. An aircraft (10) comprising a propulsion system (300) as claimed in claims 7 to 11 wherein the **first mode of operation** corresponds to a gas turbine engine (400) start, idle and/or low-power condition.

15. An aircraft (10) comprising a propulsion system (300) as claimed in claim 14 wherein: the other modes of operation provide a range of power conditions.

## Patentansprüche

1. Antriebssystem (300) für ein Luftfahrzeug (10), das Folgendes umfasst:
einen ersten Kraftstoffbehälter (100), ausgelegt zum Speichern von Wasserstoff (H2-1);
einen zweiten Kraftstoffbehälter (200), ausgelegt zum Speichern eines Kohlenwasserstoff-Kraftstoffs (HC);
ein Gasturbinentriebwerk (400), umfassend eine Kraftstoffeinspritzeinheit (500), das Folgendes umfasst: einen Wasserstoffzündbrenner (510) in Fluidverbindung mit dem ersten Kraftstoffbehälter (100) über ein erstes Strömungssteuerungsventil (512);
einen Doppelkraftstoff-Hauptbrenner (520) in Fluidverbindung mit dem ersten Kraftstoffbehälter (100) über ein zweites Strömungssteuerungsventil (522) und in Fluidverbindung mit dem zweiten Kraftstoffbehälter (200) über ein drittes Strömungssteuerungsventil (532);
ein Steuerungssystem (600), betreibbar zum Steuern:
des ersten Strömungssteuerungsventils (512) zum Steuern des Stroms von Wasserstoff (H2-1) vom ersten Kraftstoffbehälter (100) zum Wasserstoffzündbrenner (510) ;
des zweiten Strömungssteuerungsventils (522) zum Steuern des Stroms von Wasserstoff vom ersten Kraftstoffbehälter (100) zum Doppelkraftstoff-Hauptbrenner (520);
des dritten Strömungssteuerungsventils (532) zum Steuern des Stroms des Kohlenwasserstoff-Kraftstoffs (HC) vom zweiten Kraftstoffbehälter (200) zum Doppelkraftstoff-Hauptbrenner (520).

2. Antriebssystem (300) nach Anspruch 1, wobei der erste Kraftstoffbehälter (100) ein Niedertemperatur- und Niederdruckbehälter zum Speichern von flüssigem Wasserstoff ist; und
wobei das Antriebssystem ferner einen dritten Kraftstoffbehälter (800) umfasst, der ausgelegt ist zum Speichern von druckbeaufschlagtem Wasserstoffgas (H2-2); wobei der dritte Kraftstoffbehälter (800) über ein viertes Strömungssteuerungsventil (542) in Fluidverbindung mit dem Wasserstoffzündbrenner (510) ist;
wobei das Steuerungssystem (600) betreibbar ist zum Steuern:
des vierten Strömungssteuerungsventils (542) zum Steuern des Stroms von Wasserstoff (H2-2) vom dritten Kraftstoffbehälter (800) zum Wasserstoffzündbrenner (510) ;
wobei der dritte Kraftstoffbehälter (800) über das vierte Strömungssteuerungsventil (542) in Fluidverbindung mit dem Wasserstoffzündbrenner (510) ist.

3. Antriebssystem (300) nach Anspruch 2, wobei
der erste Kraftstoffbehälter (100) über einen Wärmetauscher (110), der ausgelegt ist zum Zuführen von Wärme zu dem aus dem ersten Kraftstoffbehälter (100) zugeführten flüssigen Wasserstoff, um diesen in eine gasförmige Form umzuwandeln, in Fluidverbindung mit dem Wasserstoffzündbrenner (510) ist.

4. Antriebssystem (300) nach einem der Ansprüche 1 bis 3, wobei: der Wasserstoffzündbrenner (510) mehrere Strömungsauslässe (514) in Strömungsverbindung mit dem ersten Kraftstoffbehälter (100) umfasst.

5. Antriebssystem (300) nach Ansprüchen 2 bis 3, wobei: der Wasserstoffzündbrenner (510) mehrere Strömungsauslässe (514) in Strömungsverbindung mit dem ersten Kraftstoffbehälter (100) und dem dritten Kraftstoffbehälter (800) umfasst.

6. Antriebssystem (300) nach einem der vorhergehenden Ansprüche, wobei:
der Doppelkraftstoff-Hauptbrenner (520) mehrere Auslässe (524, 528) umfasst, die den Wasserstoffzündbrenner (510) umgeben;
wobei eine erste Teilmenge (528) von Doppelkraftstoff-Hauptbrennerauslässen (524) über einen ersten Strömungsdurchgang (550) in Strömungsverbindung mit dem ersten Kraftstoffbehälter (100) ist; und eine zweite Teilmenge (530) der Doppelkraftstoff-Hauptbrennerauslässe (524) über einen zweiten Strömungsdurchgang (552) in Strömungsverbindung mit dem zweiten Kraftstoffbehälter (200) ist; wobei der erste Strömungsdurchgang (550) und der zweite Strömungsdurchgang (552) fluidisch voneinander isoliert sind.

7. Antriebssystem (300) nach einem der vorhergehenden Ansprüche, wobei das Steuerungssystem (600) betreibbar ist zum Steuern des ersten Strömungssteuerungsventils (512), des zweiten Strömungssteuerungsventils (522) und des dritten Strömungssteuerungsventils (532), sodass:
a. in einem ersten Betriebsmodus, das erste Strömungssteuerungsventil (512) geöffnet ist, das zweite Strömungssteuerungsventil (522) geschlossen ist und das dritte Strömungssteuerungsventil (532) geschlossen ist, sodass nur Wasserstoff zum Zündbrenner (510) zugeführt wird;
b. in einem zweiten Betriebsmodus, das erste Strömungssteuerungsventil (512) geöffnet ist, das zweite Strömungssteuerungsventil (522) geöffnet ist und das dritte Strömungssteuerungsventil (532) geschlossen ist, sodass nur Wasserstoff zum Zündbrenner (510) und zum Doppelkraftstoff-Hauptbrenner (520) zugeführt wird;
c. in einem dritten Betriebsmodus, das erste Strömungssteuerungsventil (512) geöffnet ist, um Wasserstoff zum Zündbrenner (510) zuzuführen und sowohl das zweite Strömungssteuerungsventil (522) als auch das dritte Strömungssteuerungsventil (532) geöffnet sind, sodass Wasserstoff und Kohlenwasserstoff-Kraftstoff (HC) zum Doppelkraftstoff-Hauptbrenner (520) zugeführt werden; und
d. in einem vierten Betriebsmodus, das erste Strömungssteuerungsventil (512) geöffnet ist, sodass nur Wasserstoff zum Zündbrenner (510) zugeführt wird; das zweite Strömungssteuerungsventil (522) geschlossen ist und das dritte Strömungssteuerungsventil (532) geöffnet ist, sodass nur Kohlenwasserstoff-Kraftstoff (HC) zum Doppelkraftstoff-Hauptbrenner (520) zugeführt wird.

8. Antriebssystem (300) nach Anspruch 7, wenn abhängig von Anspruch 2, wobei das Steuerungssystem (600) betreibbar ist zum Steuern des vierten Strömungssteuerungsventils (542), um im ersten, zweiten, dritten und vierten Betriebsmodus geschlossen zu sein.

9. Antriebssystem (300) nach Anspruch 8, wobei das Steuerungssystem (600) betreibbar ist zum Steuern des ersten Strömungssteuerungsventils (512), des zweiten Strömungssteuerungsventils (522), des dritten Strömungssteuerungsventils (532) und des vierten Strömungssteuerungsventils (542), sodass:
in einem fünften Betriebsmodus, das erste Strömungssteuerungsventil (512) geschlossen ist, das zweite Strömungssteuerungsventil (522) geschlossen ist und das dritte Strömungssteuerungsventil (532) geschlossen ist und das vierte Strömungssteuerungsventil (542) geöffnet ist, sodass nur Wasserstoff aus dem dritten Kraftstoffbehälter (800) zum Zündbrenner (510) zugeführt wird; und
in einem sechsten Betriebsmodus das erste Strömungssteuerungsventil (512) geschlossen ist, das zweite Strömungssteuerungsventil (522) geschlossen ist; das dritte Strömungssteuerungsventil (532) geöffnet ist, sodass nur Kohlenwasserstoff-Kraftstoff (HC) zum Doppelkraftstoff-Hauptbrenner (520) zugeführt wird; und
das vierte Strömungssteuerungsventil (542) geöffnet ist, um Wasserstoff aus dem dritten Kraftstoffbehälter (800) zum Zündbrenner (510) zuzuführen.

10. Antriebssystem (300) nach einem der Ansprüche 2 bis 9, wobei das Steuerungssystem (600) betreibbar ist zum Steuern des ersten Strömungssteuerungsventils (512), des zweiten Strömungssteuerungsventils (522), des dritten Strömungssteuerungsventils (532) und des vierten Strömungssteuerungsventils (542), sodass:
in einem siebten Betriebsmodus das erste Strömungssteuerungsventil (512) und das vierte Strömungssteuerungsventil (542) geschlossen sind, sodass kein Kraftstoff zum Zündbrenner (510) zugeführt wird, und das zweite Strömungssteuerungsventil (522) geschlossen ist und das dritte Strömungssteuerungsventil (532) geöffnet ist, sodass nur Kohlenwasserstoff-Kraftstoff (HC) zum Doppelkraftstoff-Hauptbrenner (520) zugeführt wird.

11. Antriebssystem (300) nach einem der vorhergehenden Ansprüche, wobei das Gasturbinentriebwerk (400) ferner eine Brennkammer (700) umfasst.

12. Luftfahrzeug (10), umfassend ein Antriebssystem (300) nach einem der Ansprüche 7 bis 11, wobei: das Steuerungssystem (600) betreibbar ist zum Steuern der Öffnungs-/Schließrate des ersten Strömungssteuerungsventils (512), des zweiten Strömungssteuerungsventils (522) und des dritten Strömungssteuerungsventils (532) relativ zueinander, um zwischen dem ersten Betriebsmodus, dem zweiten Betriebsmodus, dem dritten Betriebsmodus und/oder dem vierten Betriebsmodus überzugehen.

13. Luftfahrzeug (10), umfassend ein Antriebssystem (300) nach Anspruch 9, wobei: das Steuerungssystem (600) betreibbar ist zum Steuern der Öffnungs-/Schließrate des ersten Strömungssteuerungsventils (512), des zweiten Strömungssteuerungsventils (522) und des dritten Strömungssteuerungsventils (542) relativ zueinander, um zwischen den Betriebsmodi überzugehen.

14. Luftfahrzeug (10), umfassend ein Antriebssystem (300) nach Ansprüchen 7 bis 11, wobei der erste Betriebsmodus einem Start, Leerlauf und/oder einer Niederleistungsbedingung eines Gasturbinentriebwerks (400) entspricht.

15. Luftfahrzeug (10), umfassend ein Antriebssystem (300) nach Anspruch 14, wobei: die anderen Betriebsmodi eine Reihe von Leistungsbedingungen bereitstellen.

## Revendications

1. Système de propulsion (300) pour un aéronef (10) comprenant :
un premier réservoir de carburant (100) conçu pour stocker de l'hydrogène (H2-1) ;
un deuxième réservoir de carburant (200) conçu pour stocker un combustible hydrocarboné (HC) ;
une turbine à gaz (400) comprenant une unité d'injection de carburant (500) comprenant :
un brûleur pilote à hydrogène (510) en communication fluidique avec le premier réservoir de carburant (100) par l'intermédiaire d'une première vanne de régulation de débit (512) ;
un brûleur principal mixte (520) en communication fluidique avec le premier réservoir de carburant (100) par l'intermédiaire d'une deuxième vanne de régulation de débit (522) et en communication fluidique avec le deuxième réservoir de carburant (200) par l'intermédiaire d'une troisième vanne de régulation de débit (532) ;
un système de commande (600) permettant de commander :
la première vanne de régulation de débit (512) pour commander le débit d'hydrogène (H2-1) depuis le premier réservoir de carburant (100) jusqu'au brûleur pilote à hydrogène (510) ;
la deuxième vanne de régulation de débit (522) pour commander le débit d'hydrogène depuis le premier réservoir de carburant (100) jusqu'au brûleur principal mixte (520) ;
la troisième vanne de régulation de débit (532) pour commander le débit du combustible hydrocarboné (HC) depuis le deuxième réservoir de carburant (200) jusqu'au brûleur principal mixte (520).

2. Système de propulsion (300) selon la revendication 1, le premier réservoir de carburant (100) étant un réservoir à basse température et à basse pression pour stocker de l'hydrogène liquide ; et
le système de propulsion comprenant en outre un troisième réservoir de carburant (800) conçu pour stocker de l'hydrogène gazeux sous pression (H2-2) ;
le troisième réservoir de carburant (800) étant en communication fluidique avec le brûleur pilote à hydrogène (510) par l'intermédiaire d'une quatrième vanne de régulation de débit (542) ;
le système de commande (600) permettant de commander :
la quatrième vanne de régulation de débit (542) pour commander le débit d'hydrogène (H2-2) depuis le troisième réservoir de carburant (800) jusqu'au brûleur pilote à hydrogène (510) ;
le troisième réservoir de carburant (800) étant en communication fluidique avec le brûleur pilote à hydrogène (510) par l'intermédiaire de la quatrième vanne de régulation de débit (542).

3. Système de propulsion (300) selon la revendication 2
le premier réservoir de carburant (100) étant en communication fluidique avec le brûleur pilote à hydrogène (510) par l'intermédiaire d'un échangeur de chaleur (110) conçu pour fournir de la chaleur à l'hydrogène liquide provenant du premier réservoir de carburant (100) afin de le convertir sous forme gazeuse.

4. Système de propulsion (300) selon l'une quelconque des revendications 1 à 3 : le brûleur pilote à hydrogène (510) comprenant une pluralité de sorties d'écoulement (514) en communication d'écoulement avec le premier réservoir de carburant (100).

5. Système de propulsion (300) selon les revendications 2 et 3 :
le brûleur pilote à hydrogène (510) comprenant une pluralité de sorties d'écoulement (514) en communication d'écoulement avec le premier réservoir de carburant (100) et le troisième réservoir de carburant (800).

6. Système de propulsion (300) selon l'une quelconque des revendications précédentes :
le brûleur principal mixte (520) comprenant une pluralité de sorties (524, 528) qui entourent le brûleur pilote à hydrogène (510) ;
un premier sous-ensemble (528) de sorties de brûleur principal mixte (524) étant en communication d'écoulement avec le premier réservoir de carburant (100) par l'intermédiaire d'un premier passage d'écoulement (550) ; et un second sous-ensemble (530) de sorties de brûleur principal mixte (524) étant en communication d'écoulement avec le deuxième réservoir de carburant (200) par l'intermédiaire d'un second passage d'écoulement (552) ; le premier passage d'écoulement (550) et le second passage d'écoulement (552) étant fluidiquement isolés l'un de l'autre.

7. Système de propulsion (300) selon l'une quelconque des revendications précédentes, le système de commande (600) pouvant commander la première vanne de régulation de débit (512), la deuxième vanne de régulation de débit (522) et la troisième vanne de régulation de débit (532) de sorte que :
a. dans un premier mode de fonctionnement, la première vanne de régulation de débit (512) soit ouverte, la deuxième vanne de régulation de débit (522) soit fermée et la troisième vanne de régulation de débit (532) soit fermée de sorte que seul l'hydrogène soit fourni au brûleur pilote (510) ;
b. dans un deuxième mode de fonctionnement, la première vanne de régulation de débit (512) soit ouverte, la deuxième vanne de régulation de débit (522) soit ouverte et la troisième vanne de régulation de débit (532) soit fermée de sorte que seul l'hydrogène soit fourni au brûleur pilote (510) et au brûleur principal mixte (520) ;
c. dans un troisième mode de fonctionnement, la première vanne de régulation de débit (512) soit ouverte pour fournir de l'hydrogène au brûleur pilote (510) et la deuxième vanne de régulation de débit (522) et la troisième vanne de régulation de débit (532) soient ouvertes de sorte que l'hydrogène et le combustible hydrocarboné (HC) soient fournis au brûleur principal mixte (520) ; et
d. dans un quatrième mode de fonctionnement, la première vanne de régulation de débit (512) soit ouverte de sorte que seul l'hydrogène soit fourni au brûleur pilote (510) ; la deuxième vanne de régulation de débit (522) soit fermée et la troisième vanne de régulation de débit (532) soit ouverte de sorte que seul le combustible hydrocarboné (HC) soit fourni au brûleur principal mixte (520) .

8. Système de propulsion (300) selon la revendication 7 lorsqu'elle dépend de la revendication 2, le système de commande (600) pouvant commander la quatrième vanne de régulation de débit (542) pour qu'elle soit fermée dans les premier, deuxième, troisième et quatrième modes de fonctionnement.

9. Système de propulsion (300) selon la revendication 8, le système de commande (600) pouvant commander la première vanne de régulation de débit (512), la deuxième vanne de régulation de débit (522), la troisième vanne de régulation de débit (532) et la quatrième vanne de régulation de débit (542) de sorte que :
dans un cinquième mode de fonctionnement, la première vanne de régulation de débit (512) soit fermée, la deuxième vanne de régulation de débit (522) soit fermée, la troisième vanne de régulation de débit (532) soit fermée et la quatrième vanne de régulation de débit (542) soit ouverte, de sorte que seul de l'hydrogène soit fourni au brûleur pilote (510) à partir du troisième réservoir de carburant (800) ; et
dans un sixième mode de fonctionnement, la première vanne de régulation de débit (512) soit fermée, la deuxième vanne de régulation de débit (522) soit fermée, la troisième vanne de régulation de débit (532) soit ouverte de sorte que seul le combustible hydrocarboné (HC) soit fourni au brûleur principal mixte (520), et la quatrième vanne de régulation de débit (542) soit ouverte pour fournir de l'hydrogène au brûleur pilote (510) à partir du troisième réservoir de carburant (800).

10. Système de propulsion (300) selon l'une quelconque des revendications 2 à 9, le système de commande (600) pouvant commander la première vanne de régulation de débit (512), la deuxième vanne de régulation de débit (522), la troisième vanne de régulation de débit (532) et la quatrième vanne de régulation de débit (542) de sorte que :
dans un septième mode de fonctionnement, la première vanne de régulation de débit (512) et la quatrième vanne de régulation de débit (542) soient fermées de sorte qu'aucun carburant ne soit fourni au brûleur pilote (510), et la deuxième vanne de régulation (522) soit fermée et la troisième vanne de régulation de débit (532) soit ouverte de sorte que seul le combustible hydrocarboné (HC) soit fourni au brûleur principal mixte (520) .

11. Système de propulsion (300) selon l'une quelconque des revendications précédentes, la turbine à gaz (400) comprenant en outre une chambre de combustion (700).

12. Aéronef (10) comprenant un système de propulsion (300) selon l'une quelconque des revendications 7 à 11 : le système de commande (600) pouvant commander le taux d'ouverture/de fermeture de la première vanne de régulation de débit (512), de la deuxième vanne de régulation de débit (522) et de la troisième vanne de régulation de débit (532) les unes par rapport aux autres pour assurer la transition entre le premier mode de fonctionnement, le deuxième mode de fonctionnement, le troisième mode de fonctionnement et/ou le quatrième mode de fonctionnement.

13. Aéronef (10) comprenant un système de propulsion (300) selon la revendication 9 : le système de commande (600) pouvant commander le taux d'ouverture/de fermeture de la première vanne de régulation de débit (512), de la deuxième vanne de régulation de débit (522), de la troisième vanne de régulation de débit et de la quatrième vanne de régulation de débit (542) les unes par rapport aux autres pour assurer la transition entre les modes de fonctionnement.

14. Aéronef (10) comprenant un système de propulsion (300) selon les revendications 7 à 11, le premier mode de fonctionnement correspondant à un état de démarrage, de ralenti et/ou de faible puissance d'une turbine à gaz (400) .

15. Aéronef (10) comprenant un système de propulsion (300) selon la revendication 14 : les autres modes de fonctionnement fournissant une plage de conditions de puissance.
